Europäisches Patentamt

European Patent Office

Office européen des brevets

(19)

(11) **EP 1 569 403 A2**

(12) **EUROPEAN PATENT APPLICATION**

(43) Date of publication:
**31.08.2005 Bulletin 2005/35**

(51) Int Cl.$^7$: **H04L 27/26**, H04L 1/00

(21) Application number: **05004374.4**

(22) Date of filing: **28.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **27.02.2004 KR 2004013668**

(71) Applicant: **SAMSUNG ELECTRONICS CO., LTD. Gyeonggi-do (KR)**

(72) Inventors:
• **Cho, Yun-Ok, Samsung Electronics Co., Ltd. Suwon-si, Gyeonggi-do (KR)**

• **Lee, Ju-Ho, Samsung Electronics Co., Ltd. Suwon-si, Gyeonggi-do (KR)**
• **Yu, Han Il, Samsung Electronics Co., Ltd. Suwon-si, Gyeonggi-do (KR)**
• **Oh, Hyun-Seok, Samsung Electronics Co., Ltd. Suwon-si, Gyeonggi-do (KR)**
• **Cho, Joon-Young, Samsung Electronics Co., Ltd. Suwon-si, Gyeonggi-do (KR)**

(74) Representative: **Grünecker, Kinkeldey, Stockmair & Schwanhäusser Anwaltssozietät Maximilianstrasse 58 80538 München (DE)**

(54) **Method and apparatus for transmitting channel quality information in a multicarrier communication system**

(57)    A method and apparatus for efficiently transmitting channel quality information in an OFDM communication system using dynamic channel allocation and adaptive modulation, and determining parameters required for time-division channel quality information transmission in an asynchronous CDMA communication system are provided. In the OFDM communication system in which a plurality of subcatriers are allocated to a plurality of UEs, the subcarriers are divided into a plurality of subcarrier groups each having at least one subcarrier. Each of the UEs determines and transmits the channel quality information of each of the subcarrier groups according to predetermined transmission parameters at transmission time points that do not overlap with those of other UEs. A Node B dynamically allocates the subcarriers to the UEs and their corresponding modulation schemes according to the channel quality information.

FIG.4

EP 1 569 403 A2

**Description**

**BACKGROUND OF THE INVENTION**

1. Field of the Invention

The present invention relates to a mobile communication system, and in particular, to a method of efficiently transmitting channel quality information in an OFDM (Orthogonal Frequency Division Multiplexing) communication system using dynamic channel allocation and adaptive modulation and a method of determining parameters required for time-division channel information transmission in an asynchronous CDMA (Code Division Multiple Access) communication system.

2. Description of the Related Art

OFDM is a multicarrier modulation scheme in which the entire frequency band is divided into multiple subcarriers and channel information is created and transmitted on a subcarrier basis, thereby lengthening the transmission period of the channel quality information. Because of its resistance to ISI (Inter-Symbol Interference) and its ability to implement difficult high-speed systems, OFDM has attracted more and more interest.

The OFDM system adopts dynamic channel allocation and adaptive modulation to allow multiple access from multiple users. The dynamic channel allocation and adaptive modulation is a technique that appropriately allocates subcarriers to the users through radio channel scheduling based on channel quality information from the users. In addition, the highest-order modulation scheme that satisfies a predetermined error rate for each subcarrier is determined.

Since the channel characteristics of UEs (User Equipments) using the same subcarriers are independent in the OFDM system, all subcarriers can be efficiently used except where every UE experiences deep fading. Therefore, the dynamic channel allocation and adaptive modulation significantly improve the performance of the OFDM system.

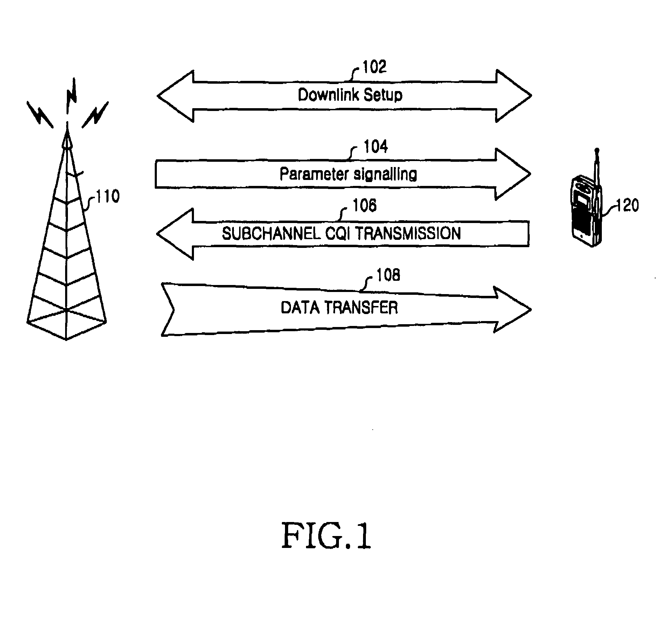

FIG 1 is a diagram illustrating a signaling procedure between a Node B and a UE to perform dynamic channel allocation and adaptive modulation in a typical mobile communication system. In the illustrated case, a Node B 110 supports the dynamic channel allocation and adaptive modulation and a UE 120 receives data on a channel dynamically allocated by the Node B 110.

Referring to FIG 1, when a downlink directed from the Node B 110 to the UE 120 is established in step 102, the Node B 110 notifies the UE 120 of parameters required for the dynamic channel allocation, inclusive of a transmission period, by signaling in step 104. The UE 120 estimates the channel quality value of a signal received from the Node B 110 and reports the channel quality value to the Node B 110 at a time point set according to the transmission period in step 106.

While only one UE 120 is shown, all UEs within the cell area of the Node B 110 behave in the same manner so that the Node B 110 acquires the channel quality values of all subcarriers from every UE.

Once the Node B has all the channel quality values from the UEs, the Node B 110 schedules data transmission for the UEs based on the channel quality values, thereby determining channels to be allocated and modulation schemes for the UEs. After scheduling, the Node B 110 notifies the UE 120 of the result by signaling and transmits data on a downlink traffic channel to the UE 120 in step 108. The UE demodulates the data to obtain the determined modulation scheme.

Periodic dynamic channel allocation in the Node B requires reporting of the channel quality information for all the total subcarriers from UEs, creating a large uplink signaling overhead To reduce overhead, prior art OFDM systems regulate the total subcarriers into a plurality of groups and transmits channel quality information on a subcarrier group basis. Configuring the number of the subcarrier groups is a huge challenge depending on channel condition and system parameters; overhead is inevitable to a certain extent. Accordingly, a need exists for a technique of allocating subcarrier groups and efficiently transmitting channel quality information in a manner that minimizes uplink overhead in transmission of the channel quality information in a mobile communication system supporting dynamic channel allocation and adaptive modulation.

**SUMMARY OF THE INVENTION**

An object of the present invention is to substantially solve at least the above problems and/or disadvantages and to provide at least the advantages below. Accordingly, an object of the present invention is to provide a method of transmitting channel quality information required for dynamic channel allocation to allow multiple accesses in an OFDM communication system using a time-division channel transmission scheme to perform the dynamic channel allocation and adaptive modulation.

Another object of the present invention is to provide a method of reducing uplink overhead in transmitting channel quality information in an OFDM communication system using a time-division channel transmission scheme to perform dynamic channel allocation and adaptive modulation.

A further object of the present invention is to provide a method of determining parameters required for time-division transmission of a downlink channel in an asynchronous CDMA-OFDM communication system.

The above objects are achieved by providing a method and apparatus for efficiently transmitting channel quality information in an OFDM communication system using dynamic channel allocation and adaptive modulation, and determining parameters required for time-division channel quality information transmission in an asynchronous CDMA communication system.

According to one aspect of the present invention, in a method of reporting channel quality information from a plurality of UEs in an OFDM communication system in which a plurality of subcarriers are allocated to the plurality of UEs, the number of subcarrier groups ($N_G$) and a feedback cycle (k) are determined so that each subcarrier group is within a coherence bandwidth, the total subcarriers are divided into a plurality of subcarrier groups each having at least one subcarrier according to $N_G$ and k, and channel quality values of the subcarrier groups are determined and transmitted according to $N_G$ and k so that the CQI quality values from the UEs do not overlap in transmission.

According to another aspect of the present invention, in an OFDM communication system in which a plurality of subcarriers are allocated to a plurality of UEs, each of the UEs determines the number of subcarrier groups (No) and a feedback cycle (k) so that each subcarrier group is within a coherence bandwidth, divides total subcarriers into a plurality of subcarrier groups each having at least one subcarrier according to $N_G$ and $k$, determines channel quality values of the subcarrier groups, and transmits the channel quality values according to No and $k$ so that the CQI quality values are not overlapped with CQI quality values from other UEs. A Node B receives the channel quality values at channel quality transmission times, and dynamically allocates the subcarriers to the UEs and determining modulation schemes for the UEs according to the channel quality values.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a signaling procedure for dynamic channel allocation and adaptive modulation between a Node B and a UE in a typical mobile communication system;

FIG. 2 illustrates the structure of an HS-DPCCH (High Speed-Dedicated Physical Control Channel) frame for delivering a CQI (Channel Quality Indicator) in an asynchronous CDMA communication system;

FIG. 3 is a diagram illustrating the timing of transmitting channel quality information in a UE;

FIG 4 is a block diagram of a transmitter in an OFDM system according to a preferred embodiment of the present invention;

FIG 5 is a block diagram of a receiver in an OFDM system according to a preferred embodiment of the present invention;

FIG. 6 is a block diagram of a UE device for time-division CQI transmission according to a preferred embodiment of the present invention;

FIG. 7 is a block diagram of a Node B device for time-division CQI reception according to a preferred embodiment of the present invention;

FIG 8 is a detailed block diagram of a CQI generator according to a preferred embodiment of the present invention;

FIG. 9 is a diagram describing a geometric average modeling technique in which the group power of a j-th group including N parallel subcarriers is obtained through geometric-average-modeling of the channel power of the j-th group;

FIG. 10 is a diagram illustrating the timing of time-division CQI transmission according to a preferred embodiment of the present invention;

FIGs. 11A and 11B illustrate exemplary CQI transmissions according to a preferred embodiment of the present invention;

FIG. 12 is a flowchart illustrating a CQI transmission operation in the UE according to a preferred embodiment of the present invention;

FIG 13 is a flowchart illustrating a CQI reception operation in the Node B according to a preferred embodiment of the present invention; and

FIG. 14 is a flowchart illustrating an operation for determining parameters required for dynamic channel allocation based on the CQI transmission scheme according to a preferred embodiment of the present invention.

**DETAILED DESCRIPTION OF THE PREFERRED EMBODIMENTS**

Preferred embodiments of the present invention will be described herein below with reference to the accompanying drawings. In the following description, well-known functions or constructions are not described in detail since they would obscure the invention in unnecessary detail.

A cell typically serves as the physical layer of the Node B to which it belongs in a mobile communication system. Therefore, the following description of the present invention is made with the understanding that the terms "Node B" and "cell" are interchangeably used or one Node B corresponds to one cell.

The present invention achieves efficient transmission of a CQI for the purpose of dynamic channel allocation and adaptive modulation in an OFDM system. Specifically, the present invention is intended to efficiently transmit CQIs in an OFDM communication supporting dynamic channel allocation and adaptive modulation and to determine parameters to transmit CQIs in time-division in an asynchronous CDMA communication system.

Asynchronous CDMA communication system can apply OFDM to HSDPA (High Speed Downlink Packet Access) downlink channels. Now a description will be made of the definition of channel quality information, its transmission timing, and its related parameters in the typical asynchronous CDMA communication system.

The asynchronous CDMA communication system spreads data for every user over the entire frequency band. Therefore, only the CQI of the channel covering the full frequency range exists. To transmit the CQI and data, a UE preliminarily acquires control information from Node B by signaling, such as the allowed maximum number of retransmission responses, the feedback period of the CQI, the allowed maximum number of CQI repeated transmissions, and a power offset. When the UE makes a call, it continuously monitors a full HS-SCCH (High Speed Shared Control Channel), while periodically transmitting the CQI on an HS-DPCCH. Upon detection of control information needed for data reception, the UE receives data on an HS-PDSCH (High Speed Physical Downlink Shared Channel) based on the control information from the Node B.

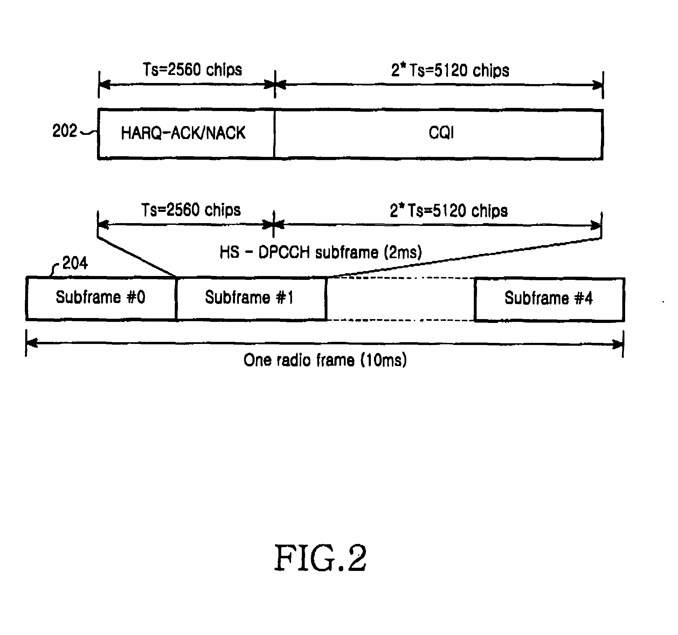

FIG. 2 illustrates the structure of an HS-DPCCH frame for delivering a CQI in an asynchronous CDMA communication system according to an embodiment of the present invention.

Referring to FIG. 2, the HS-DPCCH has 10-ms radio frames 204, each radio frame including five 2-ms subframes 202, subframe #0 to subframe #4. Each subframe 202 is divided into a 2560-chip time slot (Ts) for delivering an HARQ (Hybrid Automatic Repeat Request) ACK/NACK (Acknowledgement/Non-Acknowledgement) and a 5120-chip CQI.

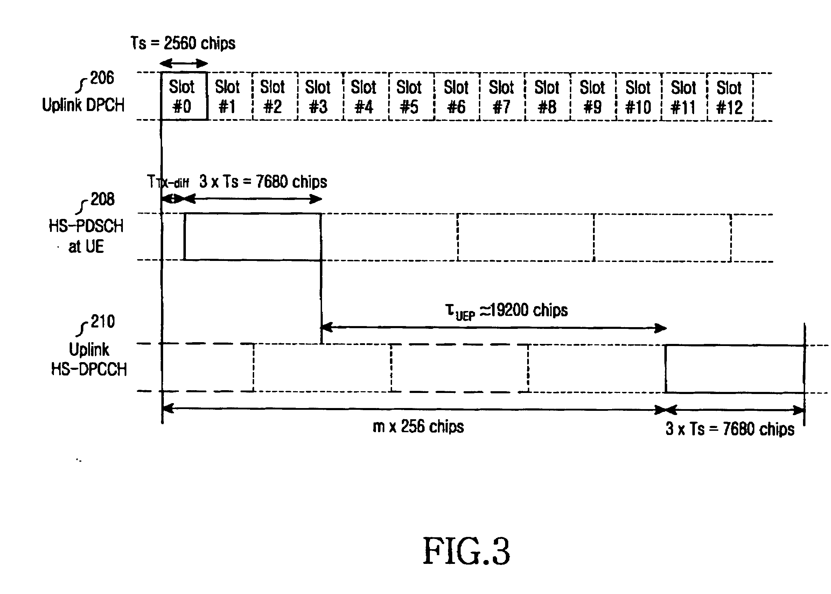

FIG. 3 is a diagram illustrating the timing of transmitting the CQI in the UE. In the illustrated case, the timings of an uplink DPCH (Dedicated Physical Channel) 206, an HS-DPCCH 210, and an HS-PDSCH 208 are shown.

Referring to FIG. 3, the HS-DPCCH frame 210, which carries the CQI, starts an m multiple of 256 chips (mx256 chips) after the start of the associated uplink DPCH 206 frame. The value m is defined as set forth in Equation (1) to be:

$$m = (T_{TX\_diff}/256)+101 \tag{1}$$

where $T_{Tx\_diff}$ is the transmission timing offset between the uplink DPCH 206 and the HS-PDSCH 208, expressed in units of chip. The transmission timing offset $\tau_{UEP}$ between the HS-PDSCH 208 and the HS-PDCCH 210 is about 19200 chips, equivalent to the processing delay of the UE.

The accurate start timing of the HS-DPCCH 210 is a time slot (slot #11 in FIG. 3) which is *i* time slots away from the start of the uplink DPCH frame 206 (slot #0 in FIG 3). The value *i* satisfies Equation (2):

$$(5 \times CFN + ((n \times 256 + i \times 2560)/7680))\bmod k = 0 \text{ and i mod 3 = 0} \tag{2}$$

where CFN (Connection Frame Number) is the CFN of the uplink DPCH 206 and *n* is a timing offset equal to *m* defined as Equation (1). The CQI is transmitted repeatedly as many times as (N_cqi_transmit-1), starting from the start of the HS-DPCCH frame 210. N_cqi_transmit-1 is a parameter received from a higher layer.

If the UE transmits a particular CQI, it indicates that data transmission by a transport block (TB) size and modulation scheme corresponding to the CQI or less does not exceed a predetermined threshold for the PER (Packet Error Rate) of single channel transmission. The CQI in the HS-DPCCH frame is 5 bits. The UE and the Node B each have the same mapping table with mapping information including TB sizes, numbers of HS-PDSCH codes, and modulations for available CQIs and UE types.

The mapping table lists TB sizes, numbers of codes used, and modulations that satisfy CQIs and PERs considering SNRs (Signal to Noise Ratio) of the HS-DPSCH according to simulated single transmission PER performance in an AWGN (Additive White Gaussian Noise) environment.

The channel power of the HS-PDSCH is calculated by adding a predetermined power offset to a CPICH (Common Pilot Channel) transmitted by Node B. That is, as shown in Equation (3):

$$P_{HS\text{-}PDSCH} = P_{CPICH} + \Gamma + \Delta [dB] \tag{3}$$

where $\Gamma$ is a parameter determining the power offset between the CPICH and the HS-DPSCH, received by signaling from a higher layer, and A is a parameter representing an available channel power decrement. If a TB size corresponding to the calculated HS-PDSCH power is larger than a maximum TB size that the UE can support, the UE can transmit data in the maximum TB size and its corresponding modulation scheme with a channel power decrease of A, satisfying a required PER.

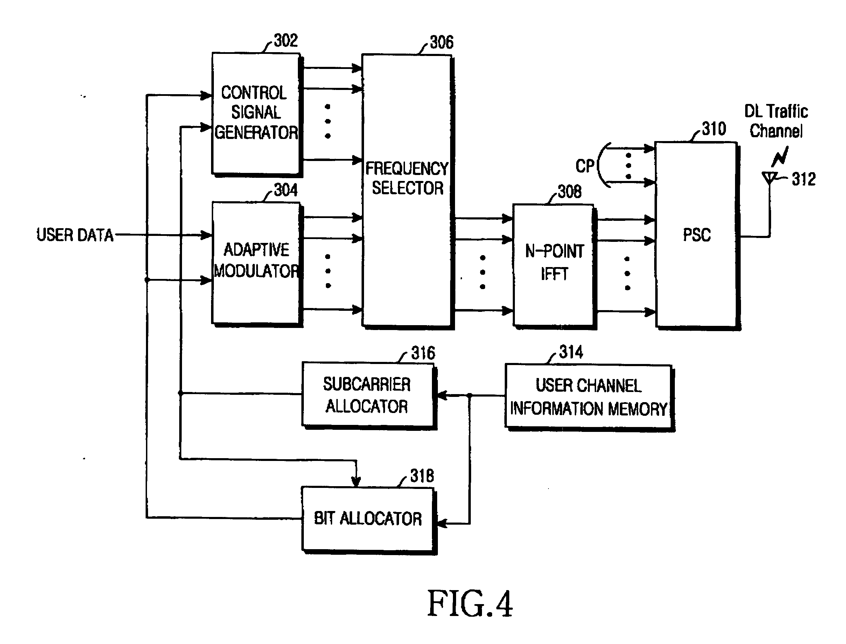

FIG. 4 is a block diagram of a transmitter in an OFDM system according to a preferred embodiment of the present invention. The transmitter is configured to transmit user data for K UEs on N subcarriers. The N subcarriers are divided into K subcarrier groups, each subcarrier group being allocated to one UE. Preferably, each subcarrier group has at least one subcarrier and N is equal to or larger than K.

Referring to FIG 4, K feedback CQIs from K UEs are stored as the channel quality information of channels between the K UEs and the Node B in user channel information memory 314 and then provided to a subcarrier allocator 316 and a bit allocator 318. The subcarrier allocator 316 allocates the whole subcarrier groups to the K UEs according to the CQIs. The subcarrier group allocation will be described later.

The bit allocator 318 allocates bits referring to the CQIs of the K UEs and subcarrier group allocation information that it receives from the subcarrier allocator 316. Specifically, the bit allocator 318 determines a modulation scheme for each UE and the bit positions for modulation symbol mappings. The subcarrier group allocation information from the subcarrier allocator 316 and bit allocation information from the bit allocator 318 are provided to a control signal generator 302 and an adaptive modulator 304.

The control signal generator 302 generates a control signal according to the subcarrier group allocation information and the bit allocation information. The adaptive modulator 304 adaptively modulates user data for the K UEs based on the bit allocation information.

A frequency selector 306 maps the control signal received from the control signal generator 302 and modulated data received from the adaptive modulator 304 to appropriate frequencies, or subcarriers. The frequency selector 306 allocates each group of subcarriers to a corresponding UE. An IFFT (Inverse Fast Fourier Transform) 308 performs an N-point IFFT on the output of the frequency selector 306.

A parallel to serial converter (PSC) 310 receives the IFFT signal and a cyclic prefix (CP). The CP is a signal transmitted for a guard interval. It cancels interference between the previous OFDM symbol and the current OFDM symbol. The guard interval can be implemented as a prefix by inserting a copy of the last predetermined bits of a time-domain OFDM symbol into an effective OFDM symbol or as a postfix by inserting a copy of the first predetermined bits of the time-domain OFDM symbol into the effective OFDM symbol.

The PSC 310 serializes the IFFT signal and the CP. After RF (Radio Frequency) processing (not shown), the serial signal is transmitted through an antenna 312.

For the RF processing, a digital to analog converter (DAC) (not shown) converts the serial signal received from the PSC 310 to an analog signal. An RF processor, including a filter and front end units, processes the analog signal to an RF signal suitable for transmission over the air and outputs the RF signal to the antenna 312.

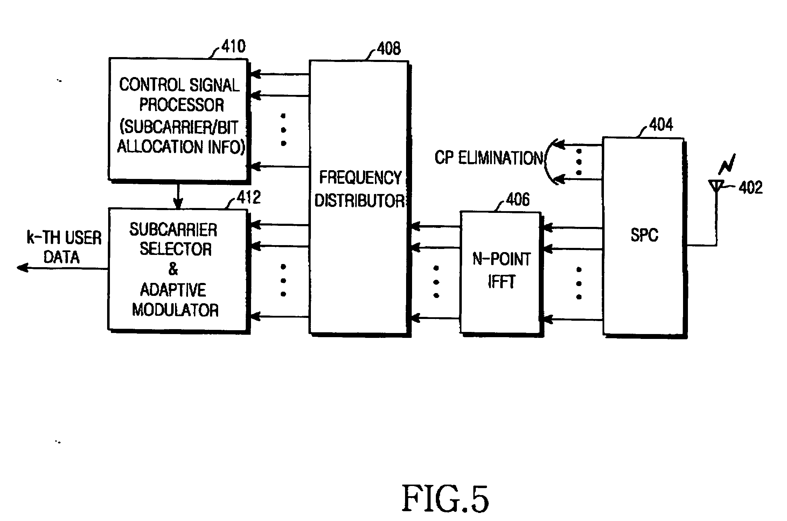

The configuration of the transmitter in the OFDM communication system has been described above with reference to FIG 4. Now, a description will be made of a receiver in the OFDM communication system with reference to FIG 5 which is a block diagram of a receiver in an OFDM communication system according to a preferred embodiment of the present invention.

Referring to FIG 5, the signal from the transmitter of FIG 4 is propagated on a multipath channel and noise is added before arriving at a receive antenna 402 in the UE. The received signal is converted to a digital signal through an RF processor (not shown) and an analog to digital converter (ADC) (not shown). A serial to parallel converter (SPC) 404 converts the digital signal to parallel signals and provides the remaining signal from which a CP signal is removed to an FFT (Fast Fourier Transform) 406.

The IFFT 406 performs an N-point FFT on the signal received from the SPC 404. A frequency distributor 408 provides a control signal processor 410 with a subcarrier signal to which a control signal was mapped and a Subcarrier Selector & Adaptive Demodulator 412 with a subcarrier signal to which user data was mapped in the FFT signal. The subcarrier Selector & Adaptive Demodulator 412 demodulates the input signal and extracts desired k-th user data using subcarrier group allocation information and bit allocation information generated by the control signal processor 410.

The operation of the subcarrier Selector & Adaptive Demodulator 412 will now be described in more detail.

Since the Node B transmits user data for the k-th UE over a predetermined subcarrier group according to the subcarrier group allocation information, the subcarrier Selector and Adaptive Demodulator 412 selects the subcarrier group allocated to the k-th UE based on the subcarrier group and bit allocation information from the control signal processor 410, demodulates the input signal by the demodulation method of the bit allocation information, and decodes the k-th user data.

In relation to the above-described transmitter and receiver configurations, if UEs generate the CQIs, buffer them, and transmit them simultaneously, it creates substantial uplink overhead. In accordance with a preferred embodiment of the present invention, the CQIs of a plurality of subcarrier groups are transmitted over time, reducing uplink overhead.

Before a detailed description of a preferred embodiment of the present invention, variables used herein will be defined as follows.

$\Gamma$ is the power offset between the CPICH and the HS-PDSCH, $\Delta$ is a reference power adjustment value, $N_G$ is the number of subcarrier groups, each having at least one subcarrier, $N_{spacing}$ is the spacing between subframes that deliver the CQIs of the subcarrier groups, and $k$ is a CQI feedback cycle.

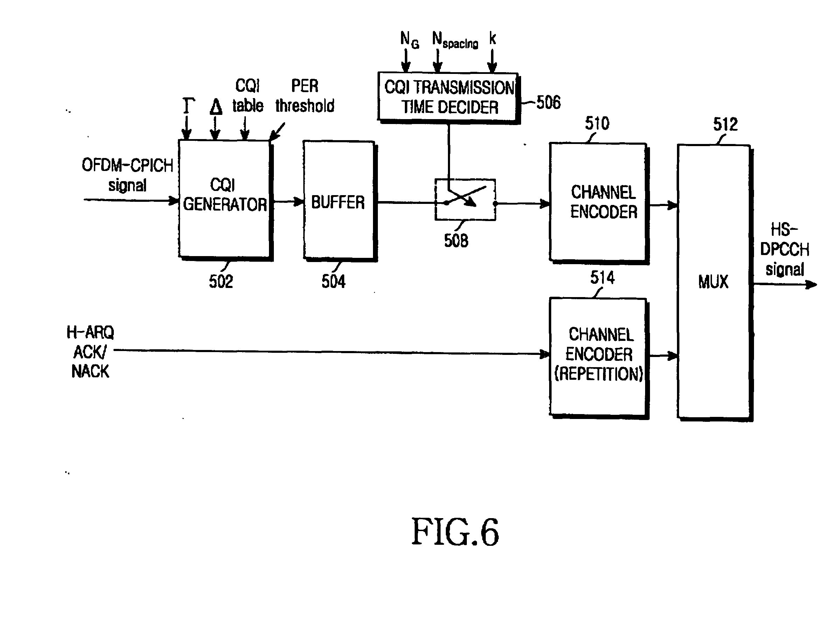

FIG. 6 is a block diagram of a UE device for time-division CQI transmission according to a preferred embodiment of the present invention. The UE device is configured to receive a CPICH signal, generate CQIs using the CPICH signal, and transmit the CQIs on the HS-DPCCH.

Referring to FIG 6, a CQI generator 502 generates CQIs using an OFDM-CPICH signal received from Node B. To that end, the CQI generator 502 utilizes the parameters of $\Gamma$, $\Delta$, and a PER threshold and a CQI table obtained by simulation. The CQI generator 502 calculates the CQIs of the total subcarrier groups at one time and sequentially stores them in a buffer 504. The number of the calculated CQIs is equal to that of the subcarrier groups, $N_G$.

A CQI transmission time decider 506 turns on a switch 508 when it is time to transmit the CQIs according to transmission parameters that determine the CQI transmission time, $N_G$, $N_{spacing}$, and k, that is, a transmission schedule to transmit the buffered CQIs.

The CQI transmission time decider 506 determines the transmission time points so that the buffered CQIs of the total subcarrier groups are transmitted within one feedback cycle, $k$(ms). One CQI transmission time point is spaced from another by $N_{spacing}$. Thus, the CQI transmission time decider 506 receives the transmission parameters of the time interval between subcarrier group-specific CQIs, $N_{spacing}$, the number of the subcarrier groups $N_G$, and the feedback cycle k.

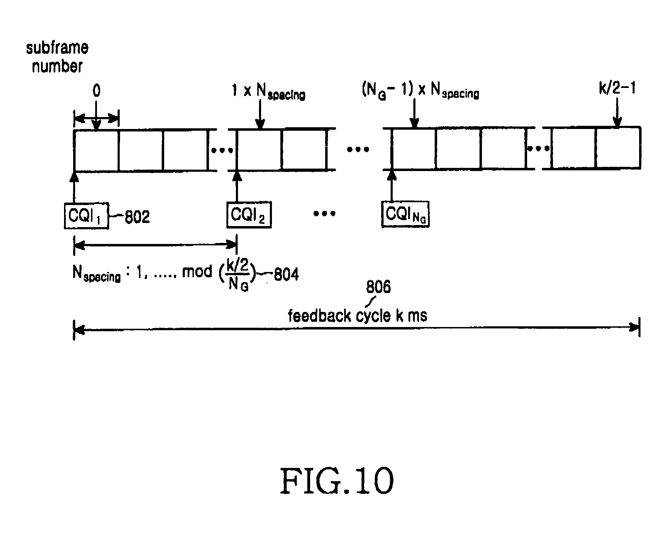

The value $k$ is a time period for which all the CQIs are completely transmitted for a new dynamic channel allocation. Therefore, it may be assumed that the entire channel information is transmitted for every period of $k$. $N_{spacing}$ is the time interval between transmission time points at which the CQIs of subcarrier groups are transmitted within $k$. How the CQIs are transmitted will be described in detail with reference to FIG. 10.

In FIG 6, as the switch 508 is turned on by the CQI transmission time decider 506, one CQI from the buffer 504 is channel-encoded in a channel encoder 510. As described before with reference to FIG 2, the HS-DPCCH delivers an ACK/NACK as a 10-bit HARQ response and a 20-bit CQI together. Therefore, an HARQ ACK/NACK occurs 10 times in the channel encoder 514. The 10-times repetition encoding compensates for the length difference between the HARQ ACK/NACK and the CQI because the 10-bit HARQ ACK/NACK occupies one time slot and the 20-bit CQI takes two.

A multiplexer (MUX) 512 time-division-multiplexes the outputs of the channel encoders 510 and 514 and transmits the multiplexed signal on the HS-DPCCH.

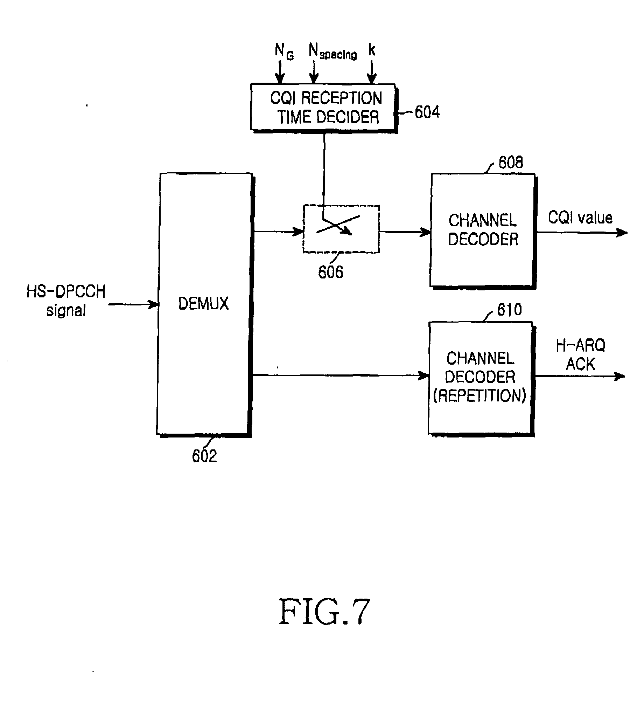

FIG. 7 is a block diagram of a Node B device for CQI reception according to a preferred embodiment of the present invention. The Node B device is configured to receive CQIs from a $k$-th UE among K UEs.

Referring to FIG. 7, a demultiplexer (DEMUX) 602 demultiplexes an HS-DPCCH signal from the UE into a CQI signal and an HARQ ACK/NACK signal. A CQI reception time decider 604 determines the reception time of the CQI signal received from the DEMUX 602 based on the CQI transmission parameters, $N_G$, $N_{spacing}$ and $k$. A switch 606 turns on at the reception time determined by the reception time decider 604. A channel decoder 608 decodes the CQI signal and extracts a CQI value. The CQI value is stored in the user channel information memory 314 as user channel information.

A channel decoder 610 repetition-decodes the HARQ ACK/NACK signal in correspondence with the channel encoder 514 and extracts an ACK/NACK for HARQ. The ACK/NACK is used to determine whether to retransmit packet data transmitted on the HS-PDSCH to the UE.

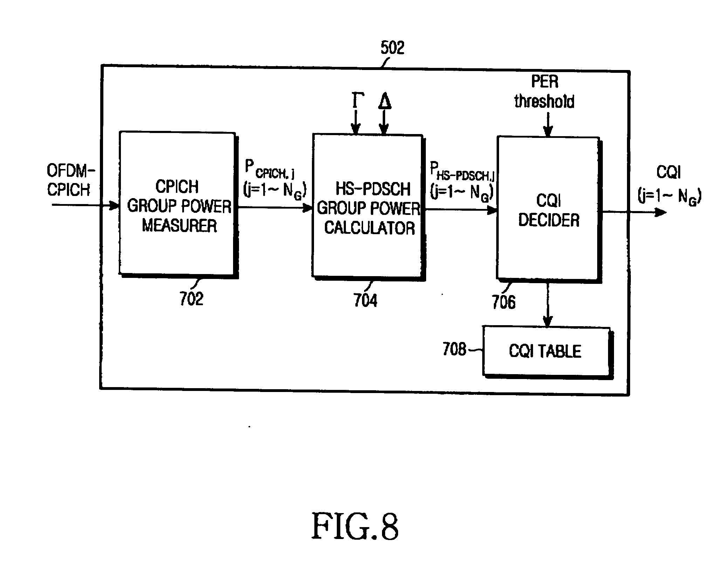

Now, the structure of the CQI generator 502 will be described in detail with reference to FIG 8.

Referring to FIG. 8, a CPICH channel power measurer 702 measures the channel power of each OFDM-CPICH subcarrier and calculates the power of each subcarrier group based on the measured channel power values. To model a plurality of subcarrier power values into one group power value, the geometric average of the total subcarrier power values is calculated.

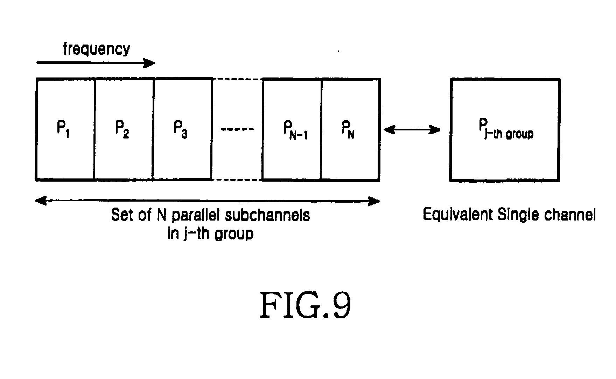

FIG 9 illustrates a geometric average modeling technique for calculating the group power of a $j$-th group including N parallel subcarriers by geometric-average-modeling the channel power o the *j*-th group.

As illustrated in FIG. 9, the *j*-th subcarrier group includes N subcarriers and the power values of the N subcarriers are respectively denoted by $P_1$, $P_2$, ..., $P_N$. With respect to the N power values, one group representative power value is obtained by Equation (4):

$$H_{HS-PDSCH,j} = P_{CPICH,j} + \Gamma + \Delta[dB]$$

$$P_{CPICH,j} = [\Pi_{i=1}^{l}(1+P_l)-1] \tag{4}$$

where 1 is the index of a subcarrier in the *j*-th group and the group representative value, $P_{CPICHj}$ is produced by equivalent-channel-modeling one subcarrier group with one equivalent subcarrier. And $\Pi$ is an operator of multiplying first through L-th elements.

An HS-PDSCH group power calculator 704 calculates HS-PDSCH power values $P_{HS-PDSCH,j}$ (j=1, ..., No) using the CPICH group representative values $P_{CPICHj}$,r and $\Delta$ by Equation (5):

$$P_{HS-PDSCH,j} = P_{CPICH,j}+\Gamma+\Delta \tag{5}$$

where $\Gamma$ is the power offset between the OFDM CPICH and the OFDM HS-PDSCH, known by higher layer signaling, and $\Delta$ is a reference power adjustment value.

Referring back to FIG 8, CQI decider 706 determines the CQIs of the subcarrier groups, $CQI_j$ based on $P_{HS-PDSCHj}$. The CQIs can translate into SNRs, TB sizes, and data rates. That is, the CQI decider 706 selects the highest available CQI according to an input $P_{HS-PDSCHj}$ value referring to a preset CQI table 708 that is based on the simulated PER performance of an AWGN channel with respect to the power (i.e. SNR) of the OFDM HS-PDSCH.

FIG 10 is a diagram illustrating the timing of time-division CQI transmission according to a preferred embodiment of the present invention.

Referring to FIG 10, the CQI feedback cycle 806 of the total subcarrier groups is *k* ms . Since one subframe is 2ms in duration, *k*/2 subframes exist within one feedback cycle. For example, the *k*/2 subframes be numbered 0, 1, ..., *k*/2-1 and a set of the numbers of sub frames delivering $N_G$ CQIs 802 be denoted by $S_{Nspacing}$. The number of elements in $S_{Nspacing}$ is equal to $N_G$ because the CQIs of the total subcarrier groups are to be transmitted. The timing of the first subframe is illustrated in FIG 2.

CQIs are transmitted at the same intervals $N_{spacing}$, and thus, $S_{Nspacing}$ is given by Equation (6):

$$S = \{0,1\times N_{spacing},...,(N_G-1)\times N_{spacing}\} \tag{6}$$

Minimum spacing is 1 ($N_{spacing\_MIN}$=1[subframe]) in transmitting No CQIs within *k* ms. In this case, all channel information is successively transmitted in the first $N_G$ subframes. As indicated by reference numeral 804, a maximum spacing is mod (k/2$N_G$) ($N_{spacing\_MAX}$= k/2$N_G$ [subframe]). With maximum spacing, the channel information is distributed as much as possible, thereby minimizing uplink overhead.

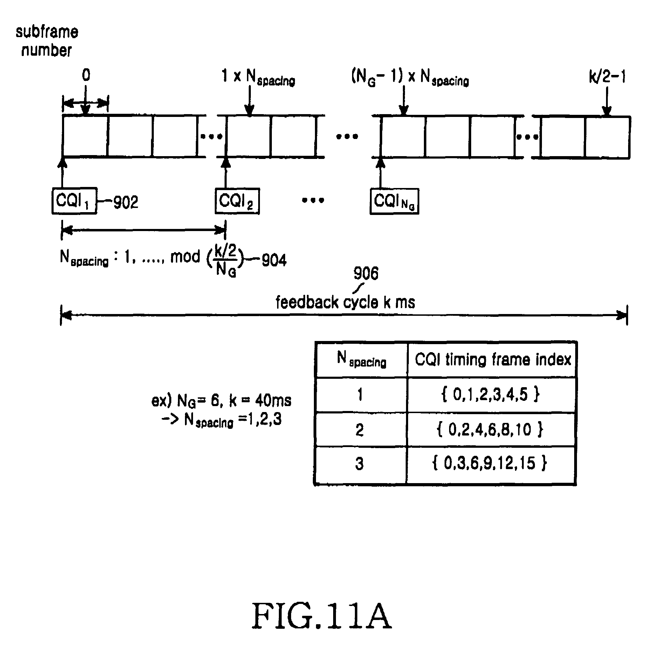

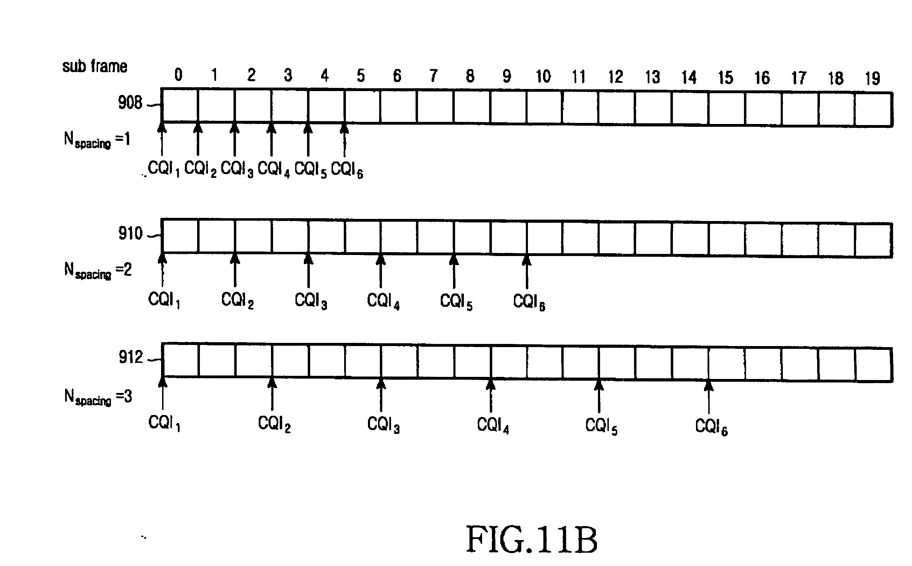

FIGs. 11A and 11B illustrate exemplary CQI transmissions according to a preferred embodiment of the present invention. Reference numeral 902 denotes the CQIs of No subcarrier groups $CQI_l$, ..., $CQI_{NG}$, reference numeral 904 denotes available $N_{spacing}$ values, and reference numeral 906 denotes the feedback cycle of the total CQI values.

In FIG 11A, for *k*=40ms and $N_G$=6, available $N_{spacing}$ values are 1, 2, 3. As a result, the timing sets 908, 910 and 912 are $S_1$={0, 1, 2, 3, 4, 5}, $S_2$={0, 2, 4, 6, 8, 10}, and $S_3$={0, 3, 6, 9, 12, 15}, respectively. In three sets, the first transmission time is equal, but the last transmission time is different, so CQI transmission is completed at different times.

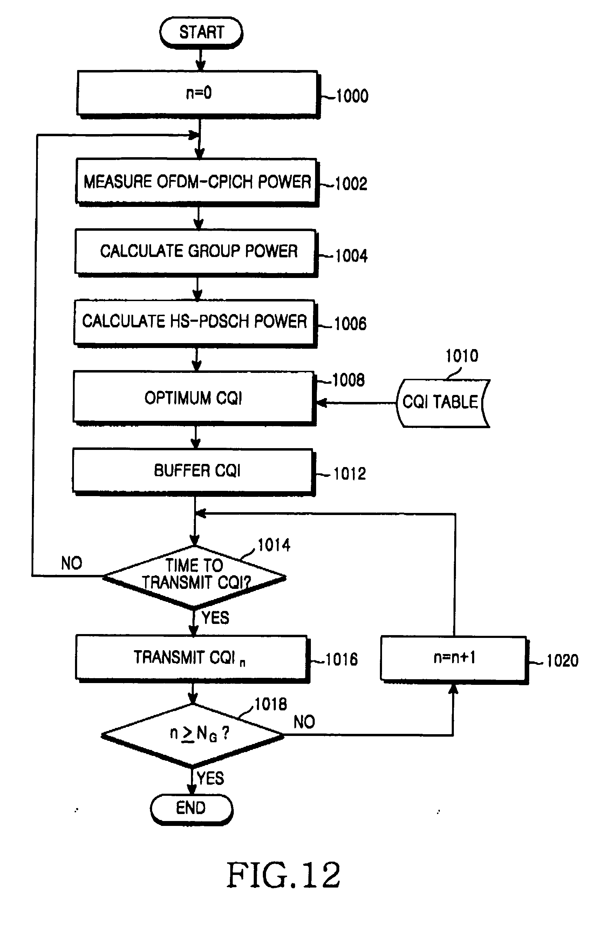

FIG. 12 is a flowchart illustrating a CQI transmission operation in the UE according to a preferred embodiment of the present invention. Referring to FIG. 12, a subcarrier group index identifying a subcarrier group, *n* is set to 0 in step 1000. The CPICH group power measurer 702 measures the power values of the OFDM CPICH on a subcarrier basis in step 1002 and calculates the equivalent power value of every subcarrier group in step 1004. In step 1006, the HS-PDSCH group power calculator 704 calculates the power values of the HS-PDSCH based on the equivalent group power values.

Upon input of the CQI table 708 in step 1010, the CQI decider 706 obtains optimum CQIs that allow transmission of a maximum amount of data, satisfying a given PER, referring to the CQI table 708 in step 1008. In step 1012, the optimum CQIs are stored in the buffer 504.

In step 1014, the CQI transmission time decider 506 determines whether to transmit a CQI according to given parameters, $N_G$, $N_{spacing}$ and $k$ at the current time. If it is time to transmit, the procedure goes to step 1016 and transmits the CQI. Otherwise, the process returns to step 1002.

When the CQI of a subcarrier group, $CQI_n$ is transmitted in step 1016, it is determined whether the subcarrier group is the last one by comparing $n$ with $N_G$ in step 1018. If the CQI of the last subcarrier group has been transmitted, the procedure is terminated. If a CQI to be transmitted still remains, $n$ is incremented by 1 in step 1020 and the procedure returns to step 1014. Steps 1014 to 1020 are repeated until the all CQIs are transmitted.

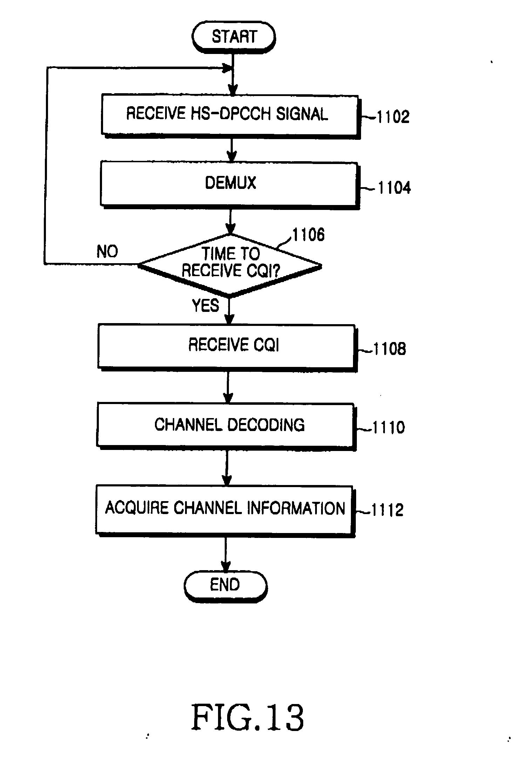

FIG. 13 is a flowchart illustrating CQI reception in the Node B according to a preferred embodiment of the present invention.

Referring to FIG. 13, the Node B receives an HS-DPCCH signal from the UE in step 1102. In step 1104, the DEMUX 602 demultiplexes the HS-DPCCH signal into a CQI signal and an HARQ ACK/NACK signal. The CQI reception time decider 604 determines whether it is time to receive a CQI according to given parameters, $N_G$, $N_{spacing}$ and $k$ in step 1106. If it is, the procedure proceeds to step 1108 and otherwise, the procedure returns to step 1102.

In step 1108, the switch 606 switches the CQI signal to the channel decoder 608 to receive the CQI. The channel decoder 608 extracts the CQI by the appropriate decoding process in step 1110 to acquire and store the CQI in step 1112 as channel information for use in subcarrier group allocation and bit allocation in the user channel information memory 314.

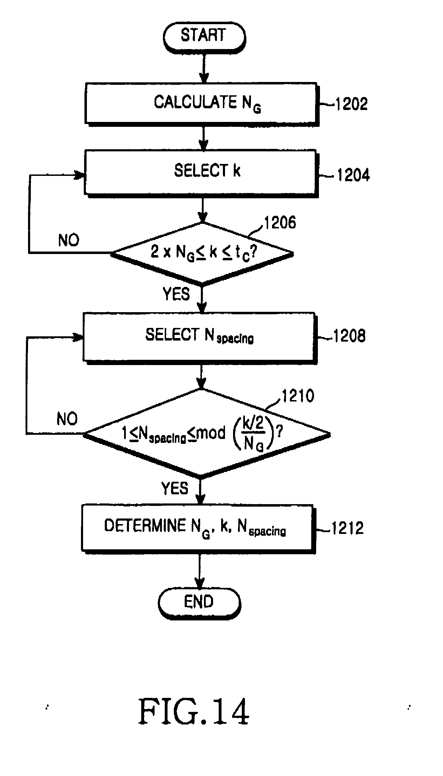

FIG. 14 is a flowchart illustrating an operation for determining parameters for dynamic channel allocation based on the CQI transmission scheme where OFDM is adopted for HSDPA downlink channels in the asynchronous CDMA communication system according to a preferred embodiment of the present invention. The parameters to be determined are $N_G$, $k$ and $N_{spacing}$. These parameters depend on channel condition, specifically a coherence bandwidth $f_c$ and a coherence time $t_c$. The following operation is performed in a Node B or in an RNC (Radio Network Controller).

Referring to FIG 14, No is calculated in step 1202. According to the above-described CQI transmission scheme, a CQI representative of the subcarriers of one subcarrier group is calculated by Eq. (4) and thus the subcarriers have similar channel gains. A coherence bandwidth typically refers to a bandwidth over which channel frequency response is considered flat. For a whole frequency band $B_r$, therefore, the frequency band that one subcarrier group occupies, $B_f/N_G$ should be less than $f_c$. Therefore, $N_G$ is a positive integer satisfying Equation (7):

$$N_G \geq \frac{B_r}{f_c} \tag{7}$$

In step 1204, $k$ is selected. Since an HS-DPCCH transmission unit, subframe is 2ms in duration, $k$ is a multiple of 2, and a minimum value of $k$ for transmitting the CQIs of the total subcarrier group, each CQI being delivered in one subframe is $2 \times N_G$. In addition, to render channel characteristics constant in one symbol period, $k$ should be less than $t_c$. The coherence time is the inverse of a Doppler frequency range in which the channel remains constant over time and is affected by the speed of a UE. Considering these conditions, k is an integer being a multiple of 2 and satisfying Equation (8):

$$2 \times N_G \leq k \leq t_c \tag{8}$$

In step 1206, a multiple of 2 satisfying Equation (8) is determined as $k$, while increasing $k$ to 2, 4, 6, 8 sequentially.

$N_{spacing}$ is set to a random number in step 1208 and it is determined whether the set $N_{spacing}$ is a positive integer satisfying

$$1 \leq N_{spacing} \leq \mathrm{mod}\left(\frac{k/2}{N_G}\right),$$

thereby deciding an appropriate $N_{spacing}$ value in step 1210.

In step 1212, the determined parameters, $k$, $N_G$, and $N_{spacing}$ are transmitted to the UE by RRC (Radio Resource Control) signaling.

In accordance with the present invention as described above, each of UEs determines the CQIs of subcarrier groups and transmits them according to predetermined transmission parameters at transmission time points that do not overlap with those of other UEs. A Node B dynamically allocates subcarriers to the UEs and modulation schemes for them according to the CQIs received from the UEs. Therefore, the amount of channel information transmitted is reduced, thereby effectively reducing uplink signaling overhead.

While the invention has been shown and described with reference to certain preferred embodiments thereof, it will be understood by those skilled in the art that various changes in form and details may be made therein without departing from the spirit and scope of the invention as defined by the appended claims.

**Claims**

1. A method of reporting channel quality information from a plurality of user equipments (UEs) in an orthogonal frequency division multiplexing (OFDM) communication system in which a plurality of subcarriers are allocated to the plurality of UEs comprising:

   determining the number of subcarrier groups ($N_G$) and a feedback cycle (k) so that each subcarrier group is within a coherence bandwidth;
   dividing total subcarriers into a plurality of subcarrier groups each having at least one subcarrier according to No and k;
   determining channel quality values of the subcarrier groups; and
   transmitting the channel quality values according to $N_G$ and $k$ so that the CQI quality values from the UEs do not overlap in transmission.

2. The method of claim 1, wherein the transmission step comprises:

   controlling a transmission time spacing ($N_{spacing}$) between the channel quality values of the subcarrier groups without overlap between the UEs; and,
   transmitting the channel quality values according to $N_{spacing}$.

3. The method of claim 2, wherein $N_{spacing}$ is a positive integer between 1 and $mod(k/(ax N_G))$ where $a$ is a minimum data unit for transmitting a channel quality value.

4. The method of claim 1, wherein $k$ is an integer between $2N_G$ and coherence time ($t_c$) and a multiple of the minimum data unit.

5. The method of claim 1, wherein $N_G$ is an integer larger than the value of dividing a total frequency bandwidth ($B_r$) by a coherence bandwidth ($f_c$).

6. The method of claim 1, wherein the channel quality value determining step comprises:

   measuring power values of an OFDM-CPICH (Common Pilot Channel) signal received on the plurality of subcarriers from a Node B;
   calculating the CPICH group power value of the subcarrier groups by geometric-average-modeling the CPICH power values on a subcarrier group basis;
   calculating HS-PDSCH (High Speed Physical Downlink Shared Channel) group power values by summing the CPICH group power values, a power offset between an HS-PDSCH and the CPICH, and a reference power adjustment value; and
   determining the channel quality values for the HS-PDSCH group power values, the channel quality values allowing transmission of a maximum amount of data while satisfying a given packet error rate.

7. The method of claim 6, wherein the channel quality values are signal to noise ratios (SNRs) or transport block sizes.

8. The method of claim 1, further comprising:

   receiving the channel quality values; and
   dynamically allocating the subcarriers to the UEs and determining modulation schemes for the UEs according to the channel quality values.

9. An orthogonal frequency division multiplexing (OFDM) communication system in which a plurality of subcarriers are allocated to a plurality of user equipments (UEs), comprising:

a Node B for determining the number of subcarrier groups ($N_G$) and a feedback cycle ($k$) so that each subearrier group is within a coherence bandwidth, dividing total subcarriers into a plurality of subcarrier groups each having at least one subcarrier according to $N_G$ and $k$, receiving the channel quality values of the subcarrier groups at channel quality transmission times, and dynamically allocating the subcarriers to the UEs and determining modulation schemes for the plurality of UEs according to the channel quality values; and

the plurality of UEs each determining channel quality values of the subcarrier groups, and transmitting the channel quality values according to $N_G$ and $k$ so that the CQI quality values are not overlapped with CQI quality values from other UEs.

10. The OFDM communication system of claim 9, wherein the Node B controls a transmission time spacing ($N_{spacing}$) between the channel quality values of the subcarrier groups without overlap between the UEs, and the UEs transmit the channel quality values according to $N_{spacing}$.

11. The OFDM communication system of claim 10, wherein $N_{spacing}$ is a positive integer between 1 and $mod(k/(a x N_G))$ where $a$ is a minimum data unit for transmitting a channel quality value.

12. The OFDM communication system of claim 11, wherein k is an integer between $2N_G$ and a coherence time ($t_c$) and a multiple of the minimum data unit.

13. The OFDM communication system of claim 9, wherein $N_G$ is an integer larger than the value of dividing a total frequency bandwidth ($B_r$) by a coherence bandwidth ($f_c$).

14. The OFDM communication system of claim 9, wherein at least one of the UEs measures the power values of an OFDM-CPICH (Common Pilot Channel) signal received on the plurality of subcarriers from the Node B, calculates the CPICH group power value of every subcarrier group by geometric-average-modeling the CPICH power values on a subcarrier group basis, calculates HS-PDSCH (High Speed Physical Downlink Shared Channel) group power values by summing the CPICH group power values, a power offset between an HS-PDSCH and the CPICH, and a reference power adjustment value, and determines the channel quality values for the HS-PDSCH group power values, the channel quality values allowing transmission of a maximum amount of data, satisfying a given packet error rate.

15. The OFDM communication system of claim 14, wherein the channel quality values are signal to noise ratios (SNRs) or transport block sizes.

EP 1 569 403 A2

FIG.1

11

Ts=2560 chips | 2* Ts=5120 chips

202 — | HARQ-ACK/NACK | CQI |

Ts=2560 chips | 2* Ts=5120 chips

HS – DPCCH subframe (2ms)

204

| Subframe #0 | Subframe #1 | | Subframe #4 |

One radio frame (10ms)

# FIG.2

FIG.3

FIG.4

EP 1 569 403 A2

FIG.5

EP 1 569 403 A2

FIG.6

EP 1 569 403 A2

$N_G$  $N_{spacing}$  k

CQI RECEPTION
TIME DECIDER ~604

608

CHANNEL
DECODER — CQI value

606

HS-DPCCH
signal → DEMUX

602

610

CHANNEL
DECODER
(REPETITION) — H-ARQ
ACK

# FIG.7

EP 1 569 403 A2

502

Γ  Δ

PER
threshold

OFDM-
CPICH

| CPICH GROUP POWER MEASURER | $P_{CPICH, j}$ $(j=1 \sim N_G)$ | HS-PDSCH GROUP POWER CALCULATOR | $P_{HS-PDSCH, j}$ $(j=1 \sim N_G)$ | CQI DECIDER |

CQI
$(j=1 \sim N_G)$

702

704

706

708 — CQI TABLE

FIG.8

frequency

P_1 | P_2 | P_3 | ----- | P_{N-1} | P_N ←→ P_{j-th group}

Set of N parallel subchannels
in j-th group

Equivalent Single channel

# FIG.9

FIG.10

subframe
number

$0$     $1 \times N_{spacing}$     $(N_G - 1) \times N_{spacing}$     $k/2 - 1$

$\boxed{CQI_1}$—902    $\boxed{CQI_2}$    ...    $\boxed{CQI_{N_G}}$

$N_{spacing} : 1, \ldots, mod\left(\dfrac{k/2}{N_G}\right)$—904

906

feedback cycle k ms

ex) $N_G = 6$, $k = 40ms$
-> $N_{spacing} = 1, 2, 3$

| $N_{spacing}$ | CQI timing frame index |
|---|---|
| 1 | { 0,1,2,3,4,5 } |
| 2 | { 0,2,4,6,8,10 } |
| 3 | { 0,3,6,9,12,15 } |

# FIG.11A

EP 1 569 403 A2

sub frame

| 0 | 1 | 2 | 3 | 4 | 5 | 6 | 7 | 8 | 9 | 10 | 11 | 12 | 13 | 14 | 15 | 16 | 17 | 18 | 19 |

908 —

$N_{spacing} = 1$

$CQI_1$ $CQI_2$ $CQI_3$ $CQI_4$ $CQI_5$ $CQI_6$

910 —

$N_{spacing} = 2$

$CQI_1$ $CQI_2$ $CQI_3$ $CQI_4$ $CQI_5$ $CQI_6$

912 —

$N_{spacing} = 3$

$CQI_1$ $CQI_2$ $CQI_3$ $CQI_4$ $CQI_5$ $CQI_6$

FIG.11B

START

n=0 —1000

MEASURE OFDM-CPICH POWER —1002

CALCULATE GROUP POWER —1004

CALCULATE HS-PDSCH POWER —1006

1010

OPTIMUM CQI —1008 ◄— CQI TABLE

BUFFER CQI —1012

1014

NO ◄— TIME TO TRANSMIT CQI?

YES

TRANSMIT CQI $_n$ —1016        n=n+1 —1020

1018

$n \geq N_G$ ? —NO

YES

END

## FIG.12

START

RECEIVE HS-DPCCH SIGNAL —1102

DEMUX —1104

TIME TO
RECEIVE CQI? —1106

NO

YES

RECEIVE CQI —1108

CHANNEL DECODING —1110

ACQUIRE CHANNEL INFORMATION —1112

END

# FIG.13

START

CALCULATE $N_G$ —1202

SELECT k —1204

1206
NO

$2 \times N_G \leq k \leq t_C?$

YES

SELECT $N_{spacing}$ —1208

1210
NO

$1 \leq N_{spacing} \leq mod\left(\dfrac{k/2}{N_G}\right)?$

YES

DETERMINE $N_G$, k, $N_{spacing}$ —1212

END

# FIG.14